# EUROPÄISCHE PATENTSCHRIFT

(11) **EP 1 507 446 B1**
(45) Veröffentlichungstag und Bekanntmachung des Hinweises auf die Patenterteilung: **27.09.2006**
(21) Anmeldenummer: 04017003.7
(22) Anmeldetag: 19.07.2004
(51) Int. Cl.: H05B 41/28

(54) **Elektronisches Vorschaltgerät für eine mit iterativen Spannungspulsen zu betreibende Lampe**
Electronic ballast for operating a lamp with iterative voltage pulses
Ballast electronique pour faire fonctionner une lamp avec des impulsions de tension iterative

(30) Priorität: 11.08.2003 DE 10336857
(43) Veröffentlichungstag der Anmeldung: 16.02.2005
(73) Patentinhaber: Patent-Treuhand-Gesellschaft für elektrische Glühlampen mbH, 81543 München (DE)
(72) Erfinder: Dellian, Harald, 83533 Edling (DE); Lecheler, Reinhard, 86633 Neuburg/Donau (DE); Schallmoser, Oskar, 85521 Ottobrunn (DE)

(56) Entgegenhaltungen:
- EP-A- 0 671 869
- US-A- 3 059 143
- US-A1- 2002 158 589

## Beschreibung

### Technisches Gebiet

Die vorliegende Erfindung betrifft ein elektronisches Vorschaltgerät für eine Lampe, und zwar insbesondere für eine für dielektrisch behinderte Entladungen ausgelegte (sog. "stille") Entladungslampe.

### Stand der Technik

Solche Entladungslampen sind an sich bekannt. Sie müssen durch ein elektronisches Vorschaltgerät betrieben werden, das iterativ Hochspannungspulse an die Entladungslampe anlegen kann. Die Erfindung richtet sich jedoch auch auf Vorschaltgeräte für andere Lampentypen, die mit iterativ erzeugten Spannungspulsen betrieben werden können, und zwar besonders auf solche Lampen oder solchermaßen verschaltete Lampen, bei denen eine kapazitive Charakteristik wie bei dielektrisch behinderten Entladungen vorherrscht.

Es ist ferner an sich bekannt, in Vorschaltgeräten zur Erzeugung von Hochspannungspulsen Induktivitäten einzusetzen und durch verschiedene Wandlerkonzepte, etwa sog. Flusswandler oder Sperrwandler, die gewünschten Spannungspulse zu erzeugen. Bei der Induktivität kann es sich dabei um eine einfache Drossel oder auch um einen sog. Spartransformator mit Abgriffen für einen Versorgungskreis und für einen die Lampe enthaltenden Lampenkreis oder, hier bevorzugt, um einen Trenntransformator handeln. Der Versorgungskreis erzeugt einen Stromfluss durch die Induktivität und ist dabei durch einen hier als ersten Schalter bezeichneten Schalter (i. d. R. Primärkreisschalter) schaltbar.

### Darstellung der Erfindung

Der Erfindung liegt das technische Problem zugrunde, dieses allgemeine Konzept eines Vorschaltgeräts weiterzuentwickeln.

Erfindungsgemäß ist hierzu eine über einen steuerbaren zweiten Schalter niederohmig kurzschließbare und mit der ersten Wicklung gekoppelte zweite Wicklung der Induktivität zur Erzeugung einer Betriebsphase des Vorschaltgeräts vorgesehen, in der die zweite Wicklung niederohmig kurzgeschlossen ist.

Die Erfindung richtet sich zudem auf ein Beleuchtungssystem nach Anspruch 10, ein elektrisches Gerät nach Anspruch 11 und ein Betriebsverfahren nach den Ansprüchen 13 und 14.

Bevorzugte Ausführungsformen der Erfindung sind im Übrigen in den abhängigen Ansprüchen angegeben.

Die Erfindung zeichnet sich also durch die Möglichkeit des Kurzschlusses einer Wicklung der Induktivität aus. Dieser Kurzschluss hat in der Realität natürlich einen gewissen von Null verschiedenen ohmschen Widerstand, soll aber im Vergleich zu den übrigen Impedanzen niederohmig sein, um die im Folgenden näher erläuterte Wirkung ausfüllen zu können. Der niederohmige Kurzschluss der Wicklung verhindert bzw. begrenzt eine Induktionsspannung an dieser Wicklung auf einen sehr kleinen Wert. Damit ergibt sich, dass der die zweite Wicklung durchsetzende magnetische Fluss im Wesentlichen zeitkonstant, also im Verhältnis zu anderen beteiligten Zeitverläufen nur sehr langsam zeitveränderlich ist. Anschaulich gesprochen kann bei dem erfindungsgemäßen Vorschaltgerät der die zweite Wicklung durchsetzende Fluss also "eingefroren" werden. Die zweite Wicklung kann dabei übrigens auch ein Teil der ersten Wicklung sein oder umgekehrt, sich also durch einen oder die Abgriffe von der ersten Wicklung unterscheiden. Es kann sich aber auch um eine eigentliche zweite Wicklung handeln. Wenn es sich um einen Trenntransformator handelt, weist dieser zwei Wicklungen, nämlich die erste und eine weitere (dritte) Wicklung auf. Dann kann die zweite Wicklung entweder Bestandteil der ersten oder der dritten oder auch eine eigene getrennte Wicklung sein.

Damit ergibt sich für den Entwickler und den Betrieb des Vorschaltgeräts ein neuer Freiheitsgrad, der in verschiedenster Weise erfindungsgemäß genutzt werden kann.

Insbesondere ist es möglich, durch das Einfrieren des magnetischen Flusses durch die zweite Wicklung magnetische Reaktionen des Kerns (jedenfalls in Bezug auf die Magnetisierungsinduktivität der zweiten Wicklung), wenn gewünscht, weitgehend zu unterbinden. Damit bleiben während des Kurzschlusses allein die bei realen Induktivitäten vorliegenden Streuinduktivitäten maßgeblich. Dieser Aspekt der Erfindung wird in der zeitgleich eingereichten Parallelanmeldung derselben Anmelderin näher erläutert.

Im Rahmen der vorliegenden Anmeldung ist es hingegen bevorzugt, den Kurzschluss der zweiten Wicklung und die durch diesen Kurzschluss definierte Betriebsphase, die im Folgenden der Einfachheit halber als Kurzschlussphase bezeichnet werden soll, zur zeitlichen Steuerung des Vorschaltgerätbetriebs einzusetzen.

Hierzu wird die Kurzschlussphase vorzugsweise durch ein von außen in das Vorschaltgerät eingehendes Triggersignal beendet. Der Vorschaltgerätbetrieb kann also auf ein äußeres Triggersignal abgestimmt werden, indem das Triggersignal (evtl. auch den Anfang, hier aber vorzugsweise) das Ende der Kurzschlussphase triggert. Natürlich muss dabei keine eigentliche Zeitgleichheit zwischen Triggersignal und Ende der Kurzschlussphase bestehen. Vielmehr können unvermeidliche oder beabsichtigte Verzögerungen auftreten. Es geht um die Kausalität in der Zeitsteuerung.

Bei dem Triggersignal kann es sich im engeren Sinn um ein Synchronsignal handeln, solange noch von einem eigenständig schwingfähigen System in dem Vorschaltgerät und einer Synchronisierung dieser Schwingung des Vorschaltgeräts durch das Triggersignal gesprochen werden kann. Im vorliegenden Zusammenhang geht es jedoch vorzugsweise um eine Triggerung im engeren Sinn, d. h. um eine vollständige Zeitsteuerung der internen Zeitabläufe in dem Vorschaltgerät durch das Triggersignal. In anderen Worten: Bei Ausbleiben des Triggersignals soll der Betrieb des Vorschaltgeräts im Prinzip enden, das Vorschaltgerät soll also seine internen Zeitabläufe vollständig von dem Triggersignal ableiten. Es verfügt demzufolge vorzugsweise nicht über ein eigenständiges Betriebstaktsignal. Dem steht natürlich eine Steuerung interner Abläufe durch elektrische Zustände und deren Messung nicht im Weg, weil diese Zustände erfindungsgemäß letztlich auf das Triggersignal zurückzuführen sind.

Das im Rahmen der vorliegenden Anmeldung bevorzugte Wandlerkonzept für die Induktivität bzw. den bevorzugten Transformator ist das Sperrwandlerkonzept. Bei einem Sperrwandler wird die erste Wicklung von einem Versorgungsstrom durchflossen und wird dieser durch den ersten Schalter unterbrochen. Der durch die Unterbrechung erzeugte Induktionsspannungspuls wird im Lampenkreis als Zünd- bzw. Betriebsspannungspuls für die Lampe genutzt.

Bei einer besonderen Ausgestaltung der Erfindung ist das Vorschaltgerät dabei so ausgelegt, dass bei dieser Trennung der ersten Wicklung von der Spannungsquelle des Versorgungskreises, also beim Öffnen des ersten Schalters, der zweite Schalter geschlossen und damit die zweite Wicklung kurzgeschlossen ist. Dies kann zu diesem Zeitpunkt instantan geschehen oder (bei unidirektionaler Leitfähigkeit des Schalters oder gleichrichtender Beschaltung) bereits zu einem vorhergehenden Zeitpunkt erfolgt sein. Daraufhin wird der in der ersten Wicklung unterbrochene Stromfluss in Folge des Kurzschlusses und der im Vergleich dazu sehr viel höheren Impedanz des Lampenkreises praktisch vollständig von der zweiten Wicklung (unter Berücksichtigung des Übersetzungsverhältnisses) übernommen und dort im Wesentlichen gehalten. Wenn im Folgenden der zweite Schalter geöffnet wird, kommt dies gewissermaßen dem konventionellen Öffnen des ersten Schalters nach dem Sperrwandlerkonzept gleich und erzeugt den bereits geschilderten Induktionsspannungspuls im Lampenkreis. Die Kurzschlussphase verzögert also den Spannungspuls im Lampenkreis gegenüber dem Öffnen des ersten Schalters im Versorgungskreis.

Es ergibt sich von selbst, dass analoge "Einfrierzustände" auch bei anderen Wandlerkonzepten, etwa bei einem Flusswandler, vorgesehen sein könnten. Der Grundgedanke besteht in diesem Zusammenhang darin, dass der Kurzschluss der zweiten Wicklung die Induktivität bzw. den Transformator auf einen bestimmten Zustand "einfriert", jedenfalls was den die zweite Wicklung durchsetzenden Fluss betrifft.

Da es sich um einen iterativen Betrieb der Lampe handelt, folgt auf das Öffnen des zweiten Schalters im Rahmen des bevorzugten Sperrwandlerkonzept ein Schließen des ersten Schalters. Vorzugsweise erfolgt dieses Schließen des ersten Schalters abhängig von dem Öffnen des zweiten Schalters zeitgesteuert, also nach Ablauf einer durch ein Zeitsteuerelement, etwa ein RC-Glied, vorgegebenen Zeitkonstante. Dies könnte natürlich zustandsgesteuert erfolgen, etwa abhängig von der an dem ersten Schalter anliegenden Spannung. Im Falle eines MOSFET wäre dies eine Abhängigkeit von der Drain-Source-Spannung. Bei dieser Erfindung können für die Schalter, insbesondere für den ersten Schalter, aber auch IGBTs verwendet werden. Diese haben Kostenvorteile und mit der technischen Entwicklung immer bessere elektrische Eigenschaften.

Eine bevorzugte Ausführungsform der erfindungsgemäßen Vorschaltgerätschaltung, die im Ausführungsbeispiel näher dargestellt ist, zeichnet sich zum einen durch eine Pulsformschaltung für die einlaufenden Triggersignale aus. Diese Pulsformschaltung passt die Form des einlaufenden Triggersignals an die Bedürfnisse nachfolgender Schaltungsteile des Vorschaltgeräts an und verbreitert insbesondere den Puls, so dass sich ein größerer zeitlicher Abstand zwischen Pulsbeginn und Pulsende ergibt. Bei der bevorzugten Ausführungsform führt der Pulsbeginn des geformten Triggersignals zum Öffnen und führt das Pulsende zum Schließen des zweiten Schalters. Wiederum gilt, dass natürlich im Prinzip definierte Zeitverzögerungen zwischen Pulsanfang bzw. Pulsende und der entsprechenden dadurch verursachten Schalterreaktion liegen können. Insbesondere im Hinblick auf den Pulsanfang ist jedoch bevorzugt, dass diese Verzögerungen nicht über unvermeidliche Verzögerungen hinausgehen, um eine möglichst instantane Triggerung zu ermöglichen.

Weiterhin zeichnet sich eine bevorzugte Ausführungsform durch eine bistabile Schaltung aus, die durch das Triggersignal gesetzt werden kann. Diese bistabile Schaltung wird durch den Beginn des Triggersignals vorzugsweise nach Zeitverzögerung gesetzt und führt durch das Setzen zum Schließen des ersten Schalters. Sie wird andererseits durch eine den Strom durch die erste Wicklung messende Strommessschaltung umgesetzt, wenn ein bestimmter Stromwert erreicht ist. Daraufhin wird der erste Schalter geöffnet. Die Zeitverzögerung bestimmt also in Zusammenhang mit dem vorherigen Absatz den Zeitabstand zwischen dem Öffnen des zweiten Schalters und damit dem Ende der Kurzschlussphase und dem Beginn einer neuen Ladephase. Das Ende der neuen Ladephase ist dann nicht durch eine Zeitkonstante sondern durch eine Zustandssteuerung abhängig von dem Wicklungsstrom der ersten Wicklung gesteuert. Da jedoch der Beginn des Ladens von dem Triggersignal abhängt, gilt dies in Folge der festliegenden Induktivität und Versorgungsspannung mittelbar auch für das Ansprechen der Strommessschaltung.

Es handelt sich also auch hier nicht um eine eigenständige Taktung des Vorschaltgeräts.

Ganz allgemein ist das Öffnen des ersten Schalters ansprechend auf das Erreichen eines bestimmten Stroms durch die erste Wicklung mit Vorteilen verknüpft. Die bei diesem Sperrwandlerpuls in die Induktivität eingespeiste Energie ist proportional zum Quadrat dieses Stroms durch die erste Wicklung. Wenn auf einen bestimmten Stromwert hin der erste Schalter geöffnet wird, ist diese "Energieeinheit" also konstant. Hätte man bei konventionellen Vorschaltgeräten ohne weitere Maßnahmen einen vergleichbaren Schalter auf einen konstanten Stromwert getaktet, so hätten sich unbeabsichtigte, aber unvermeidliche Erhöhungen oder Absenkungen der Versorgungsspannung in entsprechend früherem oder späterem Erreichen dieses Stromwerts und damit zeitlichen Schwankungen in dem Schaltzeitpunkt bemerkbar gemacht. Letztlich hätte sich damit also eine Versorgungsspannungserhöhung in einer Frequenzerhöhung und eine Versorgungsspannungabsenkung in einer Frequenzerniedrigung bemerkbar gemacht, was einer zeitlichen Anpassung an ein externes Gerät entgegenläuft und im Übrigen in Folge der erhöhten Frequenz der "Energieeinheiten" zu einer erhöhten Leistung geführt hätte. Umgekehrt wäre bei regelmäßigen Schaltzeitpunkten durch die vergrößerten oder verkleinerten "Energieeinheiten" eine Leistungsschwankung unvermeidlich gewesen.

Bei der Erfindung kann nunmehr der Schaltzeitpunkt des ersten Schalters auf den richtigen konstanten Stromwert angepasst werden. Die dabei auftretenden Zeitschwankungen können durch Anpassung der Kurzschlussphase kompensiert werden, so dass sich insgesamt eine inhärente Leistungsstabilisierung erzielen lässt. Lediglich in kürzeren Zeitspannen mit aus anderen Gründen schwankendem Triggersignal würde sich in Folge der Triggersignalunregelmäßigkeit eine kurzfristige Leistungsschwankung ergeben, solange nicht durch Anpassung des Stromwerts im Schaltzeitpunkt eine Korrektur geschaffen wird. Diese Leistungsschwankungen sind jedoch vorübergehend und unbedeutend und mit durch Versorgungsspannungsschwankungen verursachten Leistungsschwankungen nicht zu vergleichen.

Die Erfindung richtet sich neben dem Vorschaltgerät selbst auch auf ein aus dem Vorschaltgerät und einer dazu passenden für dielektrisch behinderte Entladungen ausgelegten Entladungslampe aufgebautes Beleuchtungssystem.

Besonders vorteilhafte Anwendung findet die Erfindung zudem in einem elektrischen Gerät, vorzugsweise mit einer optischen Leseeinrichtung, in dem ein solches Beleuchtungssystem eingesetzt wird. Dabei kann die Lampe Teil der Beleuchtungseinrichtung sein. Wenn nun das Gerät zudem eine optische Leseeinrichtung aufweist, etwa ein Scanner in einem Faxgerät oder einem sonstigen Bürogerät ist, kann das Taktsignal beispielsweise eine Abstimmung zwischen dem iterativen Pulsbetrieb der Lampe in der Beleuchtungseinrichtung einerseits und dem Auslesetakt einer solchen Leseeinrichtung andererseits gewährleisten.

### Kurze Beschreibung der Zeichnungen

Im Folgenden wird ein schematisches Beispiel für ein konventionelles Vorschaltgerät und ein ausführliches Ausführungsbeispiel für die Erfindung näher erläutert. Dabei offenbarte Einzelmerkmale können auch in anderen Kombinationen erfindungswesentlich sein. Insbesondere richtet sich die Erfindung sowohl auf das vorstehende und im Folgenden erläuterte Vorschaltgerät, Beleuchtungssystem etc. als auch auf ein ebenfalls vorstehend und im Folgenden implizit erläutertes Betriebsverfahren. Die Einzelmerkmale sind daher auch jeweils im Hinblick auf ihre Relevanz als Verfahrensmerkmal zu verstehen.
- Fig. 1: zeigt ein stark vereinfachtes Schemaschaltbild für ein Vorschaltgerät für eine dielektrisch behinderte Entladungslampe nach dem Stand der Technik.
- Fig. 2: zeigt Strom- und Spannungskurven zu Fig. 1.
- Fig. 3: zeigt ein stark vereinfachtes Schaltdiagramm zu einem Vorschaltgerät gemäß der Erfindung.
- Fig. 4 - 6: zeigen Strom- und Spannungsverläufe zu dem Vorschaltgerät aus Fig. 3.
- Fig. 7: zeigt ein detaillierteres Schaltgerät zu dem Schaltdiagramm aus Fig. 3.

### Bevorzugte Ausführung der Erfindung

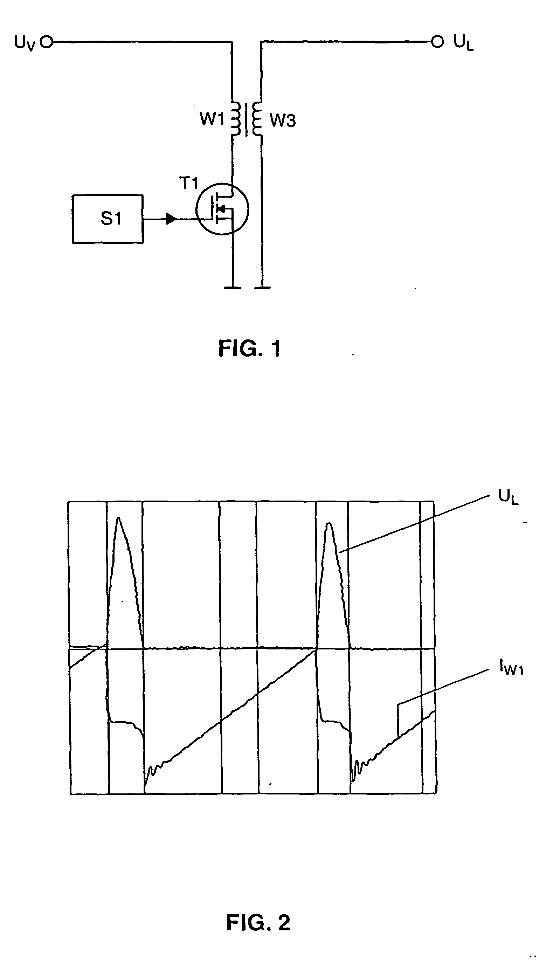

Fig. 1 zeigt ein sehr vereinfachtes Schaltdiagramm zu einem konventionellen Vorschaltgerät mit einer Versorgungsspannung U_{V} und einer die Lampe versorgenden Ausgangsspannung U_{L}, die beide auf Masse (untere Anschlüsse in Fig. 1) bezogen sind. Die Versorgungsspannung U_{V} weist eine erste Wicklung W1 eines Trenntransformators auf, deren entgegengesetzter Anschluss über einen ersten Schalter T1 mit Masse verbunden ist. Der erste Schalter T1 wird durch eine Steuerschaltung S1 in hier nur prinzipiell interessierender Weise gesteuert.

Eine weitere, hier der Konsistenz halber als dritte Wicklung bezeichnete Wicklung W3 des Trenntransformators ist induktiv mit der ersten Wicklung W1 gekoppelt und einerseits mit Masse und andererseits mit der zu versorgenden dielektrisch behinderten Entladungslampe gekoppelt. Dies ist durch die Lampenspannung U_{L} symbolisiert. Der Lampenkreis enthält also die Lampe, die dritte Wicklung W3 und weitere hier nicht näher interessierende Bauteile.

Wird die Schaltung aus Fig. 1 als Sperrwandler betrieben, so ergeben sich typischerweise in Fig. 2 dargestellte Verläufe einerseits der Spannung U_{L} und andererseits des Stromes I_{W1} durch die erste Wicklung. Man kann dabei schematisch drei Phasen unterscheiden. In einer in Fig. 2 mit 1 bezifferten Phase steigt der Wicklungsstrom I_{W1} linear an, die erste Wicklung W1 wird also aufgeladen. Am Ende der Phase 1 wird der erste Schalter T1 geöffnet, so dass I_{W1} schlagartig auf Null sinkt und gleichzeitig ein hoher Induktionsspannungpuls U_{L} am Ausgang der dritten Wicklung W3 entsteht. Dieser dient als Zünd- bzw. Betriebspuls für die Entladungslampe. Die Zeitphase dieses Spannungspulses U_{L} ist mit 2 beziffert. Am Ende der Phase 2 wird im Allgemeinen der erste Schalter T1 geschlossen. Am Ende des Spannungspulses wird in einer als Freilaufphase zu bezeichnenden Phase 3 verbleibende Restenergie aus dem Lampenkreis über den Transformator W1, W3 zurückgespeist, was sich an dem im Wesentlichen linear fallenden Betrags des Wicklungsstroms I_{W1} (mit im Vergleich zur Ladephase 1 umgekehrtem Vorzeichen) zeigt. Diese dritte Phase geht nahtlos in eine neue erste Phase über. Das Schließen des ersten Schalters T1 ist für den in Phase 3 in Fig. 2 erkennbaren Rückspeisungsvorgang, d. h. für den dortigen Induktionsstromfluss durch die erste Wicklung W1, im Falle eines MOSFET mit einer Bodydiode nicht unbedingt notwendig, weil die Bodydiode den Strom I_{W1} bei dieser Polarität (Rückspeisung von Energie in die Versorgungsspannung U_{V}) trägt.

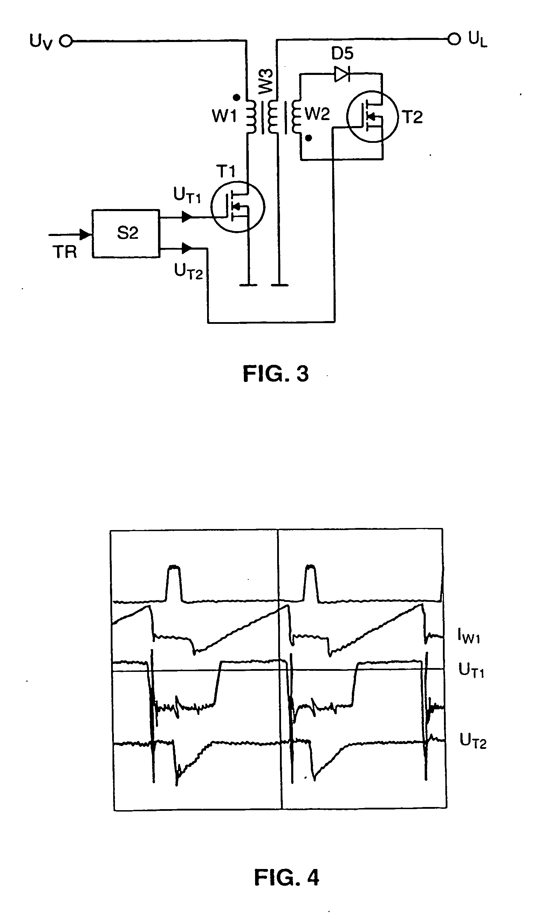

Fig. 3 zeigt in einer Fig. 2 weitgehend entsprechenden Darstellungsform das Grundschema eines erfindungsgemäßen Vorschaltgeräts. Der Trenntransformator weist hier eine zweite Wicklung W2 auf, die über einen zweiten Schalter T2 und eine Diode D5 kurzgeschlossen werden kann. Der Schalter T2 wird durch eine an die Stelle der Steuerung S1 aus Fig. 1 tretende Steuerung S2 angesteuert, die ferner wiederum den seriell zu der ersten Wicklung W1 liegenden ersten Schalter T1 ansteuert.

Die Fig. 4 - 6 zeigen neben der Lampenspannung U_{L} und dem Strom I_{W1} durch die erste Wicklung außerdem den Strom I_{W2} durch die zweite Wicklung W2 und die Ansteuerspannungen U_{T1} und U_{T2} für den ersten Schalter T1 bzw. den zweiten Schalter T2, also die Steuersignale der Steuerung S2.

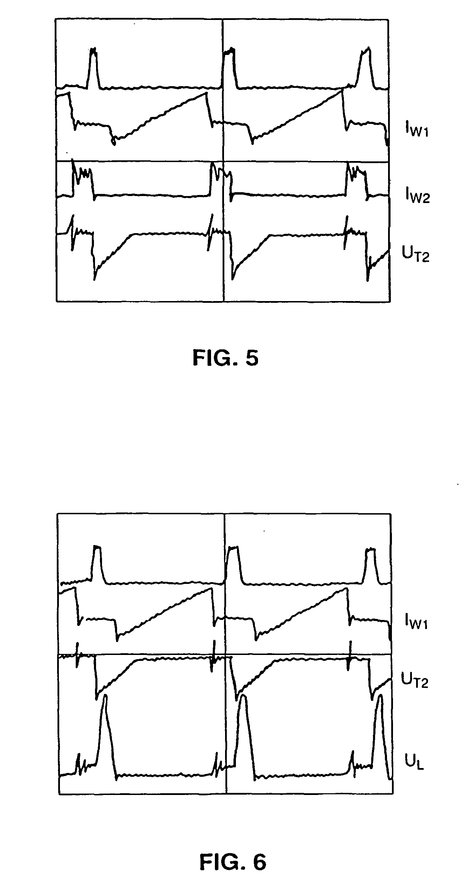

Man erkennt in Fig. 4, dass die Ansteuerspannung U_{T2} nach dem bereits geschilderten Öffnen des ersten Schalters T1, also nach der fallenden Flanke von U_{T1}, eine zeitverzögerte fallende Flanke zeigt. Diese entspricht dem Öffnen des zweiten Schalters T2 und hat, wie Fig. 6 zeigt, den in Fig. 2 direkt auf das Öffnen des Schalters T1 folgenden Spannungspuls U_{L} zur Folge. Der Unterschied zu dem konventionellen Ausführungsbeispiel aus den Fig. 1 und 2 besteht also darin, dass das Zeitverhalten der Spannung U_{L} am Ausgang der Lampenkreiswicklung W3 durch das Öffnen des zweiten Schalters T2 und nicht des ersten Schalters T1 vorgegeben wird. Die übrigen Zeitverläufe sind mit Ausnahme der entsprechend längeren Ruhephase des Stromes I_{W1} wie bereits anhand Fig. 2 erläutert. In diesem Fall wird der erste Schalter T1 wieder eingeschaltet spätestens mit dem Nulldurchgang des Stromes I_{W1}. Die Rückspeisung ist, wie gesagt, schon wegen der Freilaufdiode des Schalters T1 möglich. Das Einschalten des ersten Schalters T1 ermöglicht dann den neuen Ladevorgang, also das weitere lineare Ansteigen des Stromes I_{W1}.

Die ansteigende Flanke des Signals U_{T2} ist im Gegensatz zur ansteigenden Flanke des Signals U_{T1} schräg. Dies hat keine prinzipielle Bedeutung. Bei dem vorliegenden Ausführungsbeispiel wird das Signal U_{T2} aus einer Kondensatorentladung mit nachfolgender Invertierung gewonnen, was die schräge Anstiegsform nach sich zieht. Der Einschaltzeitpunkt des zweiten Schalters T2 ist nicht kritisch. Er muss lediglich vor dem Ausschaltzeitpunkt des ersten Schalters T1 liegen. Ein relativ frühes Einschalten des zweiten Schalters T2, wie in Fig. 4 erkennbar, stört bei diesem Ausführungsbeispiel die Vorgänge in der Schaltung bis zu dem Öffnen des ersten Schalters T1 nicht, weil bis dahin die entsprechenden Induktionsspannungen so gepolt sind, dass die in Fig. 3 erkennbare Diode D5 sperrt und damit der Kurzschluss faktisch erst durch den Polaritätswechsel der Induktionsspannung beim Öffnen des ersten Schalters T1 erfolgt.

Man erkennt im Übrigen, dass zwar, wie auch bei konventionellen Schaltungen vergleichbaren Typs, bei im Übrigen vorgegebenen Parametern die zeitliche Dauer der Ladephase (positiver Anstieg von I_{W1}), die Dauer des Spannungspulses U_{L} und die Rückspeisung während der sog. dritten Phase im Wesentlichen vorgegeben sind. Jedoch ist die zeitliche Dauer der gewissermaßen als vierte Phase zwischen die erste Phase und die zweite Phase geschalteten Kurzschlussphase frei wählbar. Damit kann also das Öffnen des zweiten Schalters T2, also die fallenden Flanke des Signals U_{T2} auf ein externes Triggersignal reagieren und damit eine vollständig fremdbestimmte und bei Bedarf auch aperiodische Taktung der Versorgungspulse U_{L} ermöglichen. Eine interne Taktung der Schaltung aus Fig. 3 ist nicht erforderlich. Das Triggersignal ist als Leitung TR in Fig. 3 symbolisch als Eingang der Ansteuerschaltung S2 eingezeichnet.

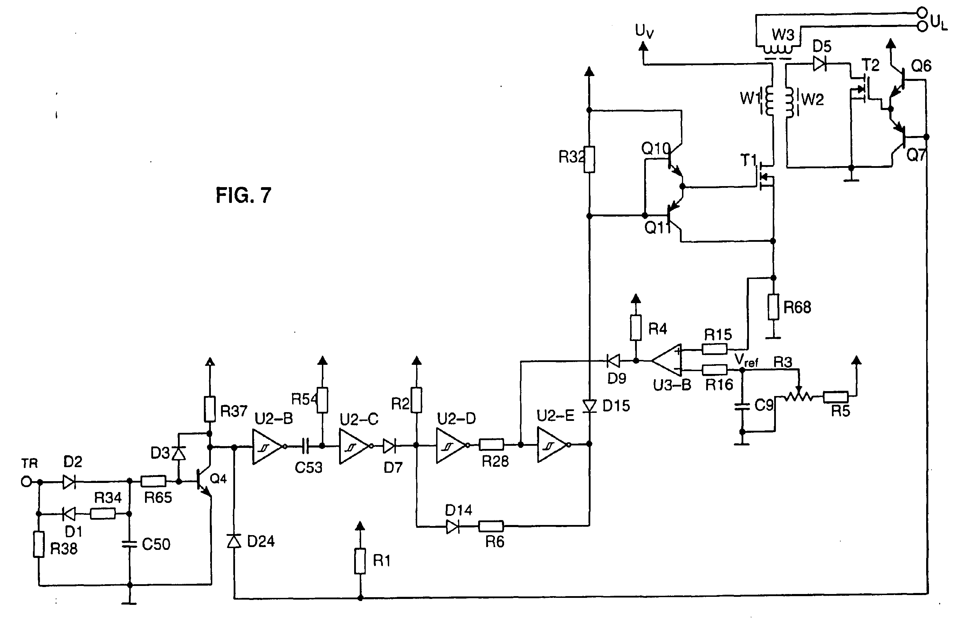

Fig. 7 zeigt ein ausführlicheres Schaltungsdiagramm für die prinzipielle in Fig. 3 dargestellte Schaltung des erfindungsgemäßen Vorschaltgeräts. In Fig. 7 sind allerdings Spannungsregelschaltungen von Versorgungsspannungen, Entstörschaltungen, Hilfsversorgungsschaltungen und ähnliche dem Fachmann ohne weiteres geläufige und für das Prinzip der Erfindung nebensächliche Details weggelassen.

Im oberen Bereich ist eine Spannungsquelle U_{V} erkennbar, die als Versorgungsspannung U_{V} an die im rechten oberen Bereich erkennbare erste Wicklung W1 angelegt ist. Die über den Widerständen R32, R2, R5, R4, R1, R54 und R37 und den Kollektor des Transistors Q6 dargestellten Pfeile symbolisieren von der Versorgungsspannung U_{V} abgeleitete Versorgungspotentiale, die sämtlich positiv sind und auf die nicht im Einzelnen eingegangen wird. Die erste Wicklung W1 ist über den bereits erwähnten ersten Schalter T1, einen Leistungs-MOSFET sowie einen Strommesswiderstand (in der realen Ausführung wegen der Strombelastung eine Parallelschaltung von Shuntwiderständen) an Masse angeschlossen. Der erste Schalter T1 wird über eine an sich bekannte Treiberschaltung (sog. Push-Pull-Schaltung) aus zwei Bipolartransistoren Q10 und Q11 angesteuert, wozu sein Gate an die Emitter dieser Treibertransistoren angeschlossen ist. Die Basen der Treibertransistoren Q10 und Q11 sind zusammengeschlossen und führen zu der im linken unteren Bereich der Fig. 7 dargestellten und im Folgenden noch erläuterten Ansteuerschaltung (S2 in Fig. 3). Dieser Anschluss kann über die Diode D15 das Potential der Basen "herunterziehen". Wenn dies nicht erfolgt, wird das Potential der Basen über den Widerstand R32 und die bereits erwähnte Spannungsversorgung U_{V} "hochgezogen".

Im oberen rechten Bereich der Fig. 7 erkennt man den Lampenkreis mit der Wicklung W3 und zwei den übrigen Lampenkreis symbolisierenden Anschlüssen, zwischen denen die Spannung U_{L} liegt.

Ferner erkennt man im oberen rechten Bereich der Fig. 7 den "Kurzschlusskreis" mit der zweiten Wicklung W2 und dem zweiten Schalter T2 sowie der Diode D5. Wiederum handelt es sich um einen Leistungs-MOSFET, dessen Gate über eine Bipolartreiberschaltung Q6 und Q7 angesteuert wird. Die Basen der Bipolartransistoren Q6 und Q7 werden über eine im rechten Bereich der Fig. 7 nach unten und im unteren Bereich nach links führende Leitung von der bereits erwähnten Ansteuerschaltung (S2 in Fig. 3) angesteuert. Dies erfolgt über die Diode D24.

Im linken unteren Bereich der Fig. 7 ist die Ansteuerschaltung im Einzelnen ausgeführt. Von links läuft das externe Triggersignal TR ein und wird durch eine von dort bis einschl. zu den Bauteilen R37 und Q4, d. h. bis zum Anschluss der Basen der Bipolartransistoren Q6 und Q7 über D24, reichende Pulsformschaltung verbreitert. Dazu wird die ansteigende Flanke über die Diode D2 und den Widerstand R65 und den Spannungsverstärkungstransistor Q4 invertiert, spannungsverstärkt und im Übrigen instantan durchgelassen. D3 bezeichnet eine Schottky-Diode zur Entsättigung des Bipolartransistors Q4.

Die fallende Flanke des Triggerpulses wird jedoch über die im Wesentlichen aus dem Widerstand R34, und dem Kondensator C50 bestehende Zeitgliedschaltung zeitverzögert und mit dieser Zeitverzögerung invertiert und spannungsverstärkt weitergegeben. In der Zeitgliedschaltung kann also der Kondensator C50 über die Diode D2 schnell geladen werden, jedoch über die Diode D1 und den Widerstand R34 nur langsam entladen werden.

Die durch die Invertierung nun fallende Anfangsflanke des Triggersignals TR kann also durch die Diode D24 das Basispotential der Treibertransistoren Q6 und Q7 absenken und damit den zweiten Schalter T2 öffnen. Der Schalter T2 bleibt solange offen, bis das Potential auf der anderen Seite der Diode D24 in Folge der Zeitverzögerung wieder angestiegen ist, so dass die Diode D24 sperrt und die Basen über den Widerstand R1 wieder hochgezogen werden, womit der zweite Schalter T2 geschlossen wird. Dieser Vorgang entspricht dem schrägen Anstieg des Signals U_{T2} in den Fig. 4 - 6.

U2-B, U2-C, U2-D und U2-E bezeichnen invertierende Schmitttrigger. Der Kondensator C53 zwischen dem Ausgang des Schmitttriggers U2-B und dem Eingang des Schmitttriggers U2-C und der Widerstand R54 bilden ein weiteres Zeitglied. Durch das Schmitttrigger U2-B ist die ursprüngliche Polarität des Triggersignals TR wieder hergestellt. Mit dessen fallender Flanke beginnt sich also der Kondensator C53 aufzuladen, dessen rechter Anschluss über den Widerstand R54 auf positivem Potential liegt.

Dies führt also zu einem Wechselspannungspulseingang in den Schmitttrigger U2-C, der invertiert durch eine Diode durchgelassen wird und demzufolge als positiver Spannungspuls am Ausgang des Schmitttriggers U2-C auftaucht. Eine Diode D7 lässt diesen Puls an den Eingang des Schmitttriggers U2-D durch.

Die nächste ansteigende Flanke des Triggersignals TR erscheint am Ausgang des Schmitttriggers U2-B ansteigend. Da die rechte Seite des Kondensators C53 durch hier nicht im Einzelnen dargestellte Klemmdioden am Eingang des Schmitttriggers U2-C nicht über das oberhalb des Widerstands R54 anliegende Versorgungspotential hinausgeschoben werden kann, wird diese positive Pulsflanke durch das Schmitttrigger U2-C nicht weitertransportiert.

Über den Widerstand R68 wird der Strom durch den ersten Schalter T1, also der Ladestrom I_{W1} gemessen. Der entsprechende Spannungswert wird über einen Widerstand R15 an den positiven Eingang eines Komparators U3-B gelegt. An dem negativen Eingang liegt ein durch einen regelbaren Widerstand R3 und einen Widerstand R5 gebildeter Referenzspannungswert V_{ref} (über einen weiteren Widerstand R16). Dabei ist der Kondensator C9 lediglich zur Entstörung vorgesehen. Der Ausgang des Komparators wird folglich positiv, wenn der Strom I_{W1} eine durch V_{ref} definierte Schwelle überschreitet. Dies erfolgt genau genommen über den Widerstand R4 und das über ihn angeschlossene Versorgungspotential, weil der Ausgang des Komparators U3-B nach Überschreiten der Schwelle hochohmig wird. Bei niedrigeren Stromwerten von I_{W1} ist der Ausgang des Komparators U3-B hingegen niederohmig, so dass die Diode D9 sperrt.

In Folge einer durch die Diode D14 und dem Widerstand R6 gebildeten Rückkopplung zwischen dem Ausgang des Schmitttriggers U2-E und dem Eingang des Schmitttriggers U2-D ist eine Verriegelung gegeben. Die beiden Schmitttrigger U2-D und U2-E bilden zusammen mit dieser Rückkopplung eine bistabile Schaltung. Folglich kann der durch Überschreiten der Schwelle für I_{W1} gebildete positive Puls die bereits erwähnte bistabile Schaltung am Eingang des Schmitttriggers U2-E setzen und damit über die Treibertransistoren Q10 und Q11 den ersten Schalter T1 öffnen.

Es wurde bereits geschildert, dass die fallende Flanke des Triggersignals TR durch die Zeitgliedschaltung aus dem Widerstand R34 und dem Kondensator C50 zeitverzögert wird und durch die Diode D7 als positiver Puls an den Eingang der bistabilen Schaltung angelegt wird. Dieser Puls kann die bistabile Schaltung umsetzen, so dass der erste Schalter T1 geschlossen wird.

Die steigende Flanke des Triggersignals TR führt insgesamt zum einen im Wesentlichen instantan zum Öffnen des zweiten Schalters T2. Wie bereits erwähnt wurde, wird der zweite Schalter T2 nach der durch die Zeitgliedschaltung gegebenen Verzögerung über die Diode D24 wieder geschlossen. Diese Zeitverzögerung lässt sich in Fig. 4 erkennen.

Die dargestellte Schaltung bildet den wesentlichen Teil eines elektronischen Vorschaltgeräts für eine vorzugsweise stabförmige dielektrisch behinderte Entladungslampe in einem einen Scanner mit einer optischen CCD-Leseeinrichtung enthaltenden Gerät, etwa einem elektronischen Fotokopierer oder einem Faxgerät.

## Patentansprüche

1. Elektronisches Vorschaltgerät für eine Lampe, insbesondere eine für dielektrisch behinderte Entladungen ausgelegte Lampe,
welches Vorschaltgerät eine Induktivität (W1 - W3) zur Erzeugung von iterativen Spannungspulsen (U_{L}) in einem die Lampe enthaltenden Lampenkreis aufweist,
welche Induktivität (W1 - W3) eine über einen ersten steuerbaren Schalter (T1) von einer Spannungsquelle (U_{V}) mit Strom (I_{W1}) beaufschlagbare und durch den ersten Schalter (T1) von der Spannungsquelle (U_{V}) trennbare erste Wicklung (W1) aufweist,
**gekennzeichnet durch** eine über einen steuerbaren zweiten Schalter (T2) niederohmig kurzschließbare und mit der ersten Wicklung (W1) gekoppelte zweite Wicklung (W2) der Induktivität (W1 - W3) zur Erzeugung einer Betriebsphase des Vorschaltgeräts, in der die zweite Wicklung (W2) niederohmig über den zur zweiten Wicklung parallel geschalteten zweiten Schalter kurzgeschlossen ist.

2. Vorschaltgerät nach Anspruch 1, bei dem die Betriebsphase in Folge eines von außen in das Vorschaltgerät eingegebenen Triggersignals (TR) beendet werden kann.

3. Vorschaltgerät nach Anspruch 2, dessen interne Zeitabläufe vollständig von dem Triggersignal (TR) abhängen.

4. Vorschaltgerät nach einem der vorstehenden Ansprüche, bei dem die Induktivität ein Transformator (W1 - W3), vorzugsweise ein Trenntransformator ist.

5. Vorschaltgerät nach einem der vorstehenden Ansprüche, welches zur Erzeugung der Spannungspulse (U_{L}) als Sperrwandler ausgelegt ist.

6. Vorschaltgerät nach Anspruch 5, das dazu ausgelegt ist, dass bei Trennung der ersten Wicklung (W1) von der Spannungsquelle (U_{V}) durch Öffnen des ersten Schalters (T1) die zweite Wicklung (W2) durch den zweiten Schalter (T2) kurzgeschlossen ist, so dass die durch den Stromfluss der ersten Wicklung (W1) erzeugte Induktion durch einen Stromfluss durch die zweite Wicklung (W2) übernommen wird, und der zweite Schalter (T2) danach geöffnet wird, so dass in den Lampenkreis ein Spannungspuls (U_{L}) eingeprägt wird.

7. Vorschaltgerät nach einem der vorstehenden Ansprüche mit einem Zeitsteuerelement (C53) zum zeitgesteuerten Schließen des ersten Schalters (T1) nach dem Öffnen des zweiten Schalters (T2).

8. Vorschaltgerät nach Anspruch 2 auch in Verbindung mit einem weiteren der vorstehenden Ansprüche mit einer Pulsformschaltung (D1, D2, C50, R34) zum Formen der Triggersignale (TR), wobei der Pulsbeginn des geformten Triggersignalpulses zum Öffnen und das Pulsende des geformten Triggersignalpulses zum Schließen des zweiten Schalters (T2) führt.

9. Vorschaltgerät nach Anspruch 2 in Verbindung mit Anspruch 7 oder 8, welches eine bistabile Schaltung (U2-D, U2-E, D14) aufweist, die in Folge des Triggersignals (TR) durch die Zeitsteuerung (C53) gesetzt werden kann, um den ersten Schalter (T1) zu schließen, und mit einer Strommessschaltung (R3, R68, U3-B) zum Messen des Stromes (I_{W1}) durch die erste Wicklung (W1), die die bistabile Schaltung (U2-D, U2-E, D14) umsetzen kann, um den ersten Schalter (T1) zu öffnen.

10. Beleuchtungssystem aus einer für dielektrisch behinderte Entladungen ausgelegten Entladungslampe und einem Vorschaltgerät nach einem der vorstehenden Ansprüche zur Versorgung der Entladungslampe.

11. Elektrisches Gerät, in dem ein Beleuchtungssystem nach Anspruch 10 verbaut ist und eine Triggersignalleitung (TR) für ein mit dem Betrieb des elektrischen Geräts abgestimmtes Triggersignal an dem Vorschaltgerät so angeschlossen ist, dass das Triggersignal (TR) zum Beenden der Betriebsphase des Vorschaltgeräts gemäß Anspruch 2 angelegt werden kann.

12. Elektrisches Gerät nach Anspruch 11, das eine optische Leseeinrichtung aufweist, die die Entladungslampe enthält, wobei das Triggersignal (TR) auf einen Lesetakt der Leseeinrichtung abgestimmt ist.

13. Verfahren zum Betreiben einer Lampe mit einem elektronischen Vorschaltgerät nach einem der Ansprüche 1 - 9, bei dem mit einer Induktivität (W1 - W3) iterative Spannungspulse (U_{L}) in einem die Lampe enthaltenden Lampenkreis erzeugt werden, wobei eine erste Wicklung (W1) der Induktivität (W1 - W3) über Steuern eines ersten Schalters (T1) von einer Spannungsquelle (U_{V}) mit Strom (l_{W1}) beaufschlagt und von der Spannungsquelle (U_{V}) getrennt wird,
**dadurch gekennzeichnet, dass** durch Steuern eines zweiten Schalters (T2) eine mit der ersten Wicklung gekoppelte zweite Wicklung (W2) der Induktivität (W1 - W3) zur Erzeugung einer Betriebsphase des Vorschaltgeräts niederohmig über den zur zweiten Wicklung parallel geschalteten Schalter kurzgeschlossen wird.

14. Verfahren zum Betreiben eines elektrischen Geräts nach Anspruch 11 oder 12 beinhaltend das Verfahren nach Anspruch 13 und das Abstimmen des Betriebs des Vorschaltgeräts auf den Betrieb des elektrischen Geräts durch Anlegen des Triggersignals (TR) an das Vorschaltgerät.

## Claims

1. Electronic ballast for a lamp, in particular a lamp which is designed for dielectrically impeded discharges, which ballast has an inductance (W1 - W3) for the purpose of producing iterative voltage pulses (U_{L}) in a lamp circuit containing the lamp, which inductance (W1 - W3) has a first winding (W1), which has current (I_{W1}) applied to it by a voltage source (U_{V}) via a first controllable switch (T1) and which can be isolated from the voltage source (U_{V}) by the first switch (T1), **characterized by** a second winding (W2), which is coupled to the first winding (W1) and can be short-circuited at a low resistance via a controllable second switch (T2), of the inductance (W1 - W3) for the purpose of producing an operating phase for the ballast, in which the second winding (W2) is short-circuited at a low resistance by means of the second switch connected in parallel with the second winding.

2. Ballast according to Claim 1, in which the operating phase can be ended as a result of a trigger signal (TR) input externally to the ballast.

3. Ballast according to Claim 2, whose internal time sequences depend entirely on the trigger signal (TR).

4. Ballast according to one of the preceding claims, in which the inductance is a transformer (W1 - W3), preferably an isolating transformer.

5. Ballast according to one of the preceding claims, which is designed as a flyback converter for the purpose of producing the voltage pulses (U_{L}).

6. Ballast according to Claim 5, which is designed such that, when the first winding (W1) is isolated from the voltage source (U_{V}) by opening the first switch (T1), the second winding (W2) is short-circuited by the second switch (T2), with the result that the induction, produced by the flow of current in the first winding (W1), is taken over by a flow of current through the second winding (W2), and the second switch (T2) is then opened, with the result that a voltage pulse (U_{L}) is applied to the lamp circuit.

7. Ballast according to one of the preceding claims having a time control element (C53) for the purpose of closing the first switch (T1) in a time-controlled manner once the second switch (T2) has been opened.

8. Ballast according to Claim 2, also in conjunction with a further one of the preceding claims having a pulse-shaping circuit (D1, D2, C50, R34) for shaping the trigger signals (TR), the pulse start of the shaped trigger signal pulse resulting in the second switch (T2) opening, and the pulse end of the shaped trigger signal pulse resulting in the second switch (T2) closing.

9. Ballast according to Claim 2 in conjunction with Claim 7 or 8, which has a bistable circuit (U2-D, U2-E, D14) which can be set, as a result of the trigger signal (TR), by the time controller (C53) in order to close the first switch (T1), and having a current-measuring circuit (R3, R68, U3-B) for measuring the current (I_{W1}) through the first winding (W1), which can reset the bistable circuit (U2-D, U2-E, D14) in order to open the first switch (T1).

10. Lighting system comprising a discharge lamp which is designed for dielectrically impeded discharges and a ballast according to one of the preceding claims for supplying power to the discharge lamp.

11. Electrical device, in which a lighting system according to Claim 10 is incorporated, and a trigger signal line (TR) for a trigger signal matched to the operation of the electrical device is connected to the ballast such that the trigger signal (TR) can be applied for the purpose of ending the operating phase of the ballast according to Claim 2.

12. Electrical device according to Claim 11, which has an optical read device which contains the discharge lamp, the trigger signal (TR) being matched to a read clock of the read device.

13. Method for operating a lamp having an electronic ballast according to one of Claims 1 to 9, in which iterative voltage pulses (U_{L}) are generated in a lamp circuit containing the lamp by means of an inductance (W1 - W3), a first winding (W1) of the inductance (W1 - W3) having current (I_{W1}) applied to it by a voltage source (U_{V}) by controlling a first switch (T1), and being isolated from the voltage source (U_{V}), **characterized in that** a second winding (W2), which is coupled to the first winding, of the inductance (W1 - W3) is short-circuited at a low resistance by means of the switch connected in parallel with the second winding for the purpose of producing an operating phase for the ballast by controlling a second switch (T2).

14. Method for operating the electrical device according to Claim 11 or 12 comprising the method according to Claim 13 and a method in which the operation of the ballast is matched to the operation of the electrical device by applying the trigger signal (TR) to the ballast.

## Revendications

1. Ballast électronique pour une lampe, notamment pour une lampe conçue pour des décharges rendues incomplètes par voie diélectrique,
ce ballast ayant une inductance (W1-W3) de production d'impulsions (Uₗ) itératives de tension dans un circuit de lampe contenant la lampe,
l'inductance (W1-W3) ayant un premier enroulement (W1) qui peut être alimenté en un courant (I_{W1}) par une première source (U_{V}) de tension par l'intermédiaire d'un premier interrupteur (T1) qui peut être commandé et qui peut être séparé de la source (U_{V}) de tension par le premier interrupteur (T1),
**caractérisé par** un deuxième enroulement (W2) de l'inductance (W1 - W3), qui peut être court-circuité à petite valeur ohmique par un deuxième interrupteur (T2) pouvant être commandé et qui peut être couplé au premier enroulement (W1) pour la production d'une phase de fonctionnement du ballast, dans laquelle le deuxième enroulement (W2) est court-circuité à petite valeur ohmique par le deuxième interrupteur monté en parallèle au deuxième enroulement.

2. Ballast électronique suivant la revendication 1, dans lequel il peut être mis fin à la phase de fonctionnement à la suite d'un signal TR de déclenchement envoyé de l'extérieur au ballast.

3. Ballast électronique suivant la revendication 2, dont les déroulements temporels internes dépendent entièrement du signal (TR) de déclenchement.

4. Ballast électronique suivant l'une des revendications précédentes, dans lequel l'inductance est un transformateur (W1 -W3), de préférence un transformateur intermédiaire.

5. Ballast électronique suivant l'une des revendications précédentes, qui est conçu pour la production des impulsions (U_{L}) de tension sous la forme d'un convertisseur à accumulation.

6. Ballast électronique suivant la revendication 5, qui est conçu de façon à ce que lors de la séparation du premier enroulement (W1) de la source (U_{V}) de tension par ouverture du premier interrupteur (T1), le deuxième enroulement (W2) est court-circuité par le deuxième interrupteur(T2) de sorte que l'induction produite par le flux de courant dans le premier enroulement (W1) est pris en charge par un flux de courant passant dans le deuxième enroulement (W2) et le deuxième interrupteur (T2) est ensuite ouvert de manière à injecter une impulsion (U_{L}) de tension dans le circuit de lampe.

7. Ballast électronique suivant l'une des revendications précédentes, comprenant un élément (C53) de commande temporelle pour fermer de manière commandée dans le temps le premier interrupteur (T1) après l'ouverture du deuxième interrupteur (T2).

8. Ballast électronique suivant la revendication 2,également en liaison avec une autre des revendications précédentes, comprenant un circuit (D1, D2, C50, R34) de mise en forme d'impulsion pour former les signaux (TR) de déclenchement le début de l'impulsion du signal de déclenchement, mis en forme provoquant l'ouverture et la fin de l'impulsion du signal de déclenchement mis en forme la fermeture du deuxième interrupteur (T2).

9. Ballast électronique suivant la revendication 2 en liaison avec la revendication 7 ou 8, qui a un circuit (U2-D, U2-E, D14) bistable, qui à la suite du signal (TR) de déclenchement, peut être positionné par la commande (C53)temporelle pour fermer le premier interrupteur (T1) et comprenant un circuit (R3,R68,U3-B)de mesure du courant (I_{W1}) passant dans le premier enroulement (W1), qui peut inverser la position du circuit (U2-D, U2-E, D14)bistable pour ouvrir le premier interrupteur (T1)

10. Système d'éclairage constitué d'une lampe à décharge conçue pour des décharges rendues incomplètes par voie diélectrique et d'un Ballast suivant l'une des revendications précédentes pour l'alimentation de la lampe à décharge.

11. Appareil électrique dans lequel un système d'éclairage suivant la revendication 10 est monté et une ligne (TR) de signal de déclenchement pour un signal de déclenchement adapté au fonctionnement de l'appareil électrique est reliée au Ballast de sorte que le signal (TR) de déclenchement peut être appliqué pour terminer la phase de fonctionnement du ballast suivant la revendication 2.

12. Appareil électrique suivant la revendication 11, qui a un dispositif de lecture optique, qui comporte la lampe de décharge, le signal TR de déclenchement étant accordé à la cadence de lecture du dispositif de lecture.

13. Procédé pour faire fonctionner une lampe ayant un ballast électronique suivant l'une des revendications 1 à 9, dans lequel on produit par une inductance (W1-W3) des impulsions
(U_{L}) itératives de tension dans un circuit contenant la lampe un premier enroulement (W1) de l'inductance (W1 - W3) étant alimenté en courant (I_{W1}) par une source (U_{V}) de tension et étant séparé de la source (U_{V}) de tension en commandant un premier interrupteur (T1),
**caractérisé en ce qu'**en commandant un deuxième interrupteur (T2) on court-circuite à basse valeur ohmique, pour la production d'une phase de fonctionnement du ballast, par l'intermédiaire de l'interrupteur monté en parallèle à un deuxième enroulement, le deuxième enroulement (W2) de l'inductance (W1-W3) qui est couplé au premier enroulement.

14. Procédé pour faire fonctionner un appareil électrique suivant la revendication 11 ou 12, incorporant le procédé suivant la revendication 13 et l'adaptation du fonctionnement du ballast au fonctionnement de l'appareil électrique par application du signal (TR) de déclenchement au ballast.
